# EUROPEAN PATENT APPLICATION

(11) **EP 4 501 472 A1**
(43) Date of publication of application: **05.02.2025**
(21) Application number: 23778904.5
(22) Date of filing: 13.02.2023
(51) Int. Cl.: B06B 1/04

(54) **VIBRATION DEVICE**

(30) Priority: 29.03.2022 JP 2022054483
(71) Applicant: HAMANAKODENSO CO., LTD., Kosai-city Shizuoka 431-0431 (JP)
(72) Inventor: TERAMOTO, Yoshifumi, Kosai-city, Shizuoka 4310431 (JP); YAMAOKA, Yui, Kosai-city, Shizuoka 4310431 (JP)
(74) Representative: Kuhnen & Wacker Patent- und Rechtsanwaltsbüro PartG mbB
(86) International application number: PCT/JP2023/004699
(87) International publication number: WO 2023/188870

(57) **Abstract**

A vibration device is provided that includes a leaf spring capable of a sufficient amount of displacement in response to an attractive force of a coil when excited. A magnetic circuit is formed by a housing, a stator core, a moving core and the leaf spring, when the coil is excited. Furthermore, the leaf spring includes a plurality of portions which are arranged in a plurality of positions symmetrical about a central axis of the coil, the plurality of portions of the leaf spring being the same shape each other, and the plurality of portions of the leaf spring being formed with a slit that increases an amount of displacement of the leaf spring. The slit has a width that enables magnetic flux to pass through when the coil is excited. The leaf spring is formed symmetrically around the central axis of the coil, resulting in a well-balanced arrangement. Furthermore, since the leaf spring is provided with the slits, the moving core can be appropriately displaced. Furthermore, since magnetic flux may pass through the slit when the coil is excited, magnetic saturation can be suppressed.

## Description

### [CROSS REFERENCE TO RELATED APPLICATION]

The present application is based on and claims the benefit of priority from Japanese Patent Application No. 2022-54483 filed on March 29, 2022, the entire disclosure of the above application is incorporated herein by reference.

### [TECHNICAL FIELD]

The present disclosure relates to a vibration device, and is suitable for use, for example, as a device that provides information by vibration to a person using equipment.

### [BACKGROUND]

As the equipment in which the vibration device is installed becomes smaller, there is a corresponding demand for miniaturization of the vibration device. On the other hand, as vibration devices become smaller, the coils also become smaller, raising concerns about a decrease in attracting force.

Patent Literature 1 describes that when a coil is excited, a moving core moves against an elastic force of an elastic member. Furthermore, Patent Literature 1 also describes use of a metal member such as a leaf spring as the elastic member. It is also described that the elastic member is used as a member that constitutes a magnetic circuit. However, Patent Literature 1 does not provide any explanation as to a specific shape of the leaf spring. The elastic member whose shape is described in Patent Literature 1 is made of a resin material.

### [PRIOR ART LITERATURE]

### [PATENT LITERATURE]

[Patent Literature 1] JP2021-164923A

### [SUMMARY]

It is an object of the present disclosure to provide a vibration device including a leaf spring capable of undergoing a sufficient amount of displacement in response to an attracting force of excited coil. In other words, the objective is to provide sufficient vibration to a moving core by devising a shape of the leaf spring that supports the moving core. It is another object of the present invention to make it difficult for magnetic saturation to occur due to the leaf spring even when the leaf spring is used as a member constituting a magnetic circuit.

A first aspect of the present disclosure provides a vibration device, comprising: a coil wound around a cylindrical bobbin and excited by being energized; a housing which holds the coil; a stator core disposed on an inner periphery of the coil and supported by the housing; a moving core disposed on the inner periphery of the coil and facing the stator core with a magnetic gap therebetween; and a leaf spring fixed to the moving core and also to the housing to bias the moving core in a direction away from the stator core.

In the first aspect of the present disclosure, the housing, the stator core, the moving core, and the leaf spring forms a magnetic circuit when the coil is excited. Furthermore, the leaf spring includes a plurality of portions which are arranged in a plurality of positions symmetrical about a central axis of the coil, the plurality of portions of the leaf spring being the same shape each other, and the plurality of portions of the leaf spring being formed with a slit that increases an amount of displacement of the leaf spring. In other words, the slit may extend a distance between the fulcrum and the point of force of the leaf spring, and a stress applied to the leaf spring can be dispersed, thereby increasing an amount of displacement of the leaf spring. The slit has a width that enables magnetic flux to pass through when the coil is excited.

In the first aspect of the present disclosure, a plurality of portions of the leaf spring having the same shape are arranged in symmetrical positions around the central axis of the coil, resulting in a well-balanced arrangement when the moving core moves. In addition, since a slit is provided in a portion of the leaf spring to increase an amount of displacement, it makes it possible to appropriately displace the moving core. Furthermore, when the coil is excited, magnetic flux flows through the slit, making it possible to suppress saturation of the magnetic flux even if a cross-sectional area of the leaf spring is reduced.

In a second aspect of the present disclosure, the plurality of portions of the leaf spring are arranged to define an interval substantially the same as a width of the slit. Since the interval between the portions of the leaf spring is set narrow to be the same as a width of the slit, magnetic flux can also flow between the portions of the leaf spring when the coil is excited. This makes it possible to further enhance the effect of suppressing magnetic saturation.

In a third aspect of the present disclosure, the leaf spring includes a first plate portion fixed to the housing, a second plate portion fixed to the moving core, and a connecting portion connecting the second plate portion and the first plate portion. Further, the slit is formed between the first plate portion and the second plate portion. Since it is possible to utilize a deformation of the first plate portion and the second plate portion by forming a slit between the first plate portion and the second plate portion, it is possible to increase an amount of displacement of the leaf spring.

In a fourth aspect of the present disclosure, a width of the first plate portion, a width of the second plate portion, and a width of the connecting portion are substantially the same as each other. This makes it possible to prevent an occurrence of any portion inside the leaf spring that restricts magnetic flux when the coil is excited.

In a fifth aspect of the present disclosure, the leaf spring includes a plurality of outer peripheral portions which face the housing and being connected with each other. Since a plurality of outer peripheral portions of the leaf spring are connected to each other, they can be assembled integrally, making assembly easy.

In a sixth aspect of the present disclosure, the plurality of outer peripheral portions of the leaf spring is fixed to the housing by a winding and fastening method. Since the plurality of portions of the leaf spring are connected at their outer peripheries each other, it is possible to fix it by the winding and fastening method.

### [BRIEF DESCRIPTION OF DRAWINGS]

FIG. 1 is a perspective view of a vibration device.
FIG. 2 is a plan view of the vibration device shown in FIG. 1.
FIG. 3 is a front view of the vibration device shown in FIG. 1.
FIG. 4 is a cross-sectional view along a line IV-IV in FIG. 2.
FIG. 5 is a perspective view of other example of a vibration device.
FIG. 6 is a perspective view of yet another example of a vibration device.
FIG. 7 is a configuration diagram showing an example of use of a vibration device.
FIG. 8 is a perspective view of yet another example of a vibration device.
FIG. 9 is a perspective view of yet another example of a vibration device.
FIG. 10 is a perspective view of yet another example of a vibration device.
FIG. 11 is a front view of the vibration device shown in FIG. 10.
FIG. 12 is a perspective view of yet another example of a vibration device.
FIG. 13 is a front view of the vibration device shown in FIG. 12.

### [DETAILED DESCRIPTION]

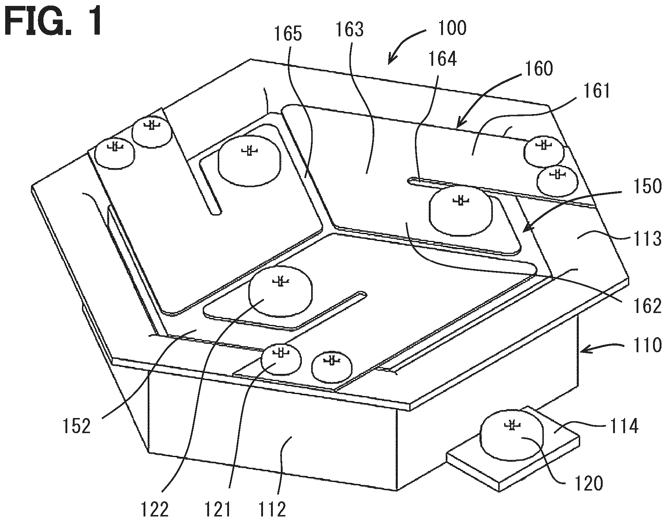

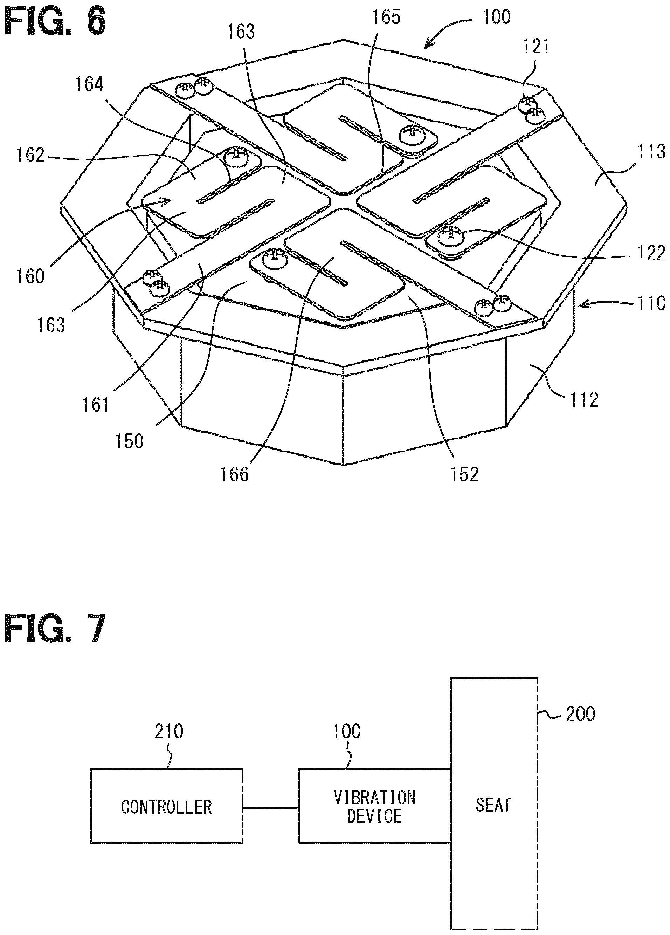

In FIGS. 1 to 4, reference numeral 100 denotes a vibration device, which is disposed, for example, on a seating surface or a back surface of a seat 200 of a vehicle, as shown in FIG. 7. The vibration device 100 may be used to communicate information, e.g., failure to fasten a seat belt or warning of predicted danger to a passenger by vibration. A vibration information from the vibration device 100 is information that the passenger can feel directly. Furthermore, since this information is different from normal signal information such as visual or auditory information, it is a particularly useful means of transmitting information as predicted danger information. For example, if a sensor (not shown) detects a possibility of a collision, the vibration device 100 may be vibrated.

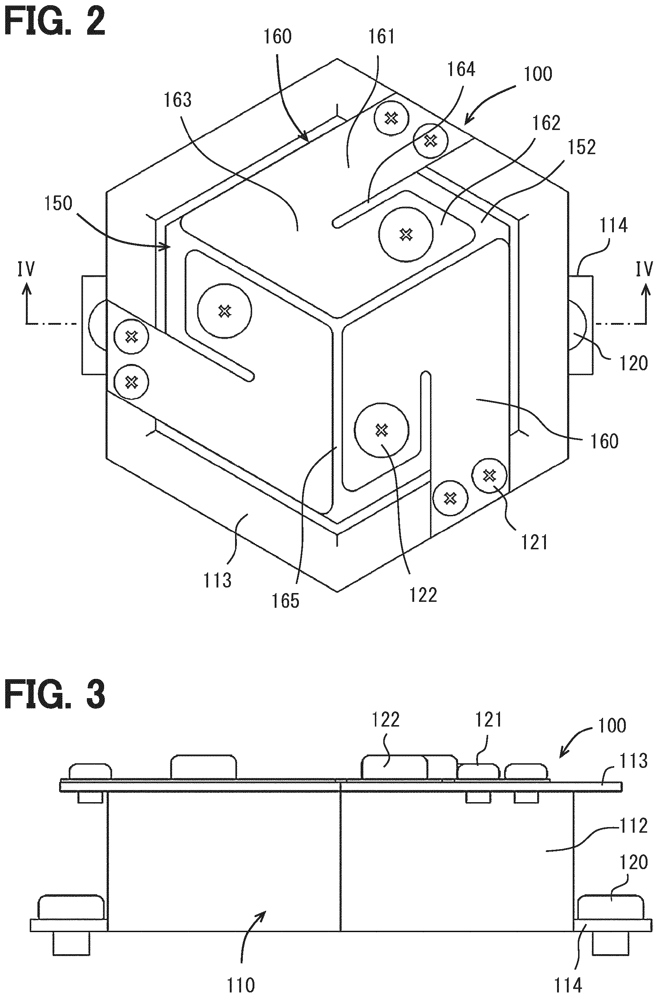

The housing 110 of the vibration device 100 has a hexagonal shape with a front width of about 30 millimeters as shown in FIG. 3. The height of the housing 110 is about 10-15 millimeters. Additionally, the housing 110 is made of a magnetically conductive ferrous material. The housing 110 has a bottom 111 in a hexagonal shape and a wall 112 extending perpendicularly from the bottom 111. A distal end of the wall 112 widens outward to form a flange portion 113. Mounting pieces 114 extend outward from two portions of the bottom 111, and a mounting hole 115 is formed in the mounting piece 114, respectively. The vibration device 100 is fixed to a frame of a seat 200 of a vehicle by a frame bolt 120 at the mounting piece 114.

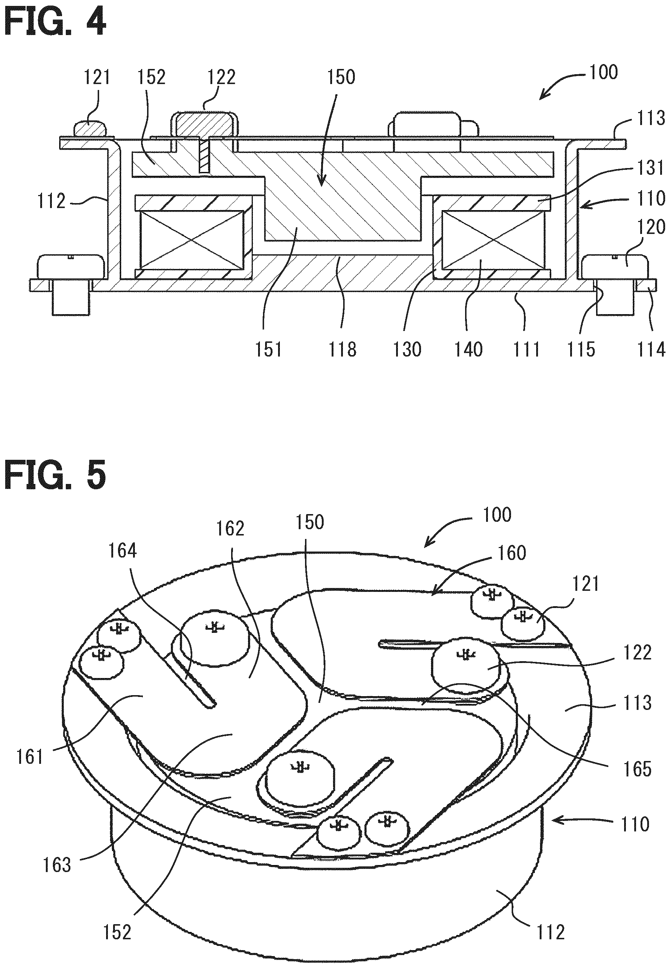

As shown in FIG. 4, a bobbin 130 made of an insulating resin material is disposed inside the housing 110. The bobbin 130 has a circular cylindrical shape and has flanges 131 on both ends. An enamel-coated copper wire is wound around the bobbin 130 many times (for example, 300 turns) to form a coil 140.

The stator core 118 is disposed in an inner periphery of the bobbin 130. More specifically, the stator core 118 is integrally formed with the bottom portion 111 of the housing 110. The inner periphery of the bobbin 130 fits onto the outer periphery of the stator core 118, thereby positioning the coil 140 within the housing 110. The coil 140 and the housing 110 are fixed together by adhesive or bolts.

A moving core 150 is also disposed in the inner periphery of the bobbin 130. The moving core 150 is disposed to face the stator core 118 with a magnetic gap therebetween. The moving core 150 is also made of an iron-based material like the housing 110 and the stator core 118. The moving core 150 is composed of a columnar portion 151 located in the inner periphery of the bobbin 130 and a flat plate portion 152 facing the flange portion 131 of the bobbin 130. The flat plate portion 152 has a hexagonal shape similar to that of the housing 110 and is housed compactly within the housing 110.

As shown in FIG. 2, the moving core 150 is fixed to the flange portion 113 of the housing 110 by a leaf spring 160. The leaf spring 160 is made of spring steel, is generally J-shaped, and is made up of a first plate portion 161, a second plate portion 162, and a connecting portion 163 that connects the first plate portion 161 and the second plate portion 162. A slit 164 is formed between the first plate portion 161 and the second plate portion 162. In other words, the leaf spring 160 is separated by the slit 164 into the first plate portion 161 and the second plate portion 162. As a result, it is possible to make longer a length of the first plate portion 161 and the second plate portion 162 compared to a surface area of the leaf spring 160, thereby a stress caused by deformation of the leaf spring 160 is dispersed and an amount of displacement of the leaf spring 160 is increased. Moreover, the first plate portion 161, the second plate portion 162 and the connecting portion 163 of the leaf spring 160 have substantially the same width.

The first plate portion 161 has an end portion that abuts against the flange portion 113 of the housing 110. In this state, it is fixed to the flange portion 113 by flange bolts 121. On the other hand, the second plate portion 162 has an end portion that abuts against the moving core 150 and is fixed to the moving core 150 by the core bolt 122. Therefore, the portion fixed to the flange portion 113 by the flange bolts 121 functions as the fulcrum of the leaf spring 160, and the portion fixed to the moving core 150 by the core bolt 122 functions as the point of force of the leaf spring 160.

In the example of FIG. 2, three pieces of the leaf spring 160 having the same shape are used, and the three pieces of the leaf spring 160 are arranged so as to be a point symmetrical around the central axis of the coil 140 (bobbin 130). The width of the slit 164 is 1 millimeter or less, and magnetic flux can jump over the slit 164 when the coil 140 is excited. The intervals 165 between the three portions of the leaf spring 160 are also narrow, less than 1 millimeter, similar to the slits 164. Therefore, even if three pieces of the leaf spring 160 are used or the slits 164 are formed in the leaf spring 160, it is possible to suppress a magnetic saturation caused by the intervals 165 and the slits 164.

Next, an operation of the vibration device 100 having the above-described configuration is described. The coil 140 of the vibration device 100 is supplied with power from a battery (not shown). This power supply is controlled by a control device 210 shown in FIG. 7, and is supplied in a form of a rectangular wave of about 50-100 Hz with a duty ratio of 50 percent. That is, current is supplied to energize the coil 140 for 5-10 milliseconds and then is not supplied to de-energize for 5-10 milliseconds. This energization and de-energization alternate continuously for a period controlled by the control device 210.

When the coil 140 is energized, the coil 140 is excited and a magnetic circuit is created around the coil 140. In this example, the housing 110, the stator core 118, the moving core 150 and the leaf spring 160 form a magnetic circuit. In this magnetic circuit, the magnetic gap is formed between the moving core 150 and the stator core 118, so that the moving core 150 is attracted to the stator core 118.

The leaf spring 160 works as means for restricting the movement of the moving core 150 during this period. If the moving core 150 moves towards the stator core 118, the leaf spring 160 is elastically deformed, and an elastic force generated by the elastic deformation urges the moving core 150 in a direction of pulling it back from the stator core 118. Therefore, even if the moving core 150 is displaced toward the stator core 118, the moving core 150 and the stator core 118 are not collide with each other.

The elastic deformation of the leaf spring 160 is caused by bending deformation at the first plate portion 161, torsional deformation at the connecting portion 163, and bending deformation at the second plate portion 162. As described above, even if the leaf spring 160 has a small projected surface area, it is possible to obtain a sufficient displacement for the moving core 150 to move toward a side of the stator core 118 by providing the slit 164. In other words, even if the coil 140 is also made smaller as the vibration device 100 is made smaller and a magnetic force during energization is reduced, the leaf spring 160 can ensure the necessary amount of displacement.

However, since the width of the slit 164 is narrow, the width of the first plate portion 161, the second plate portion 162 and the connecting portion 163 of the leaf spring 160 is almost the entire projected surface area of the leaf spring 160. Therefore, even though the leaf spring 160 has a small projected surface area, it is possible to prevent the moving core 150 from colliding with the stator core 118. In this example, a spring force of the leaf spring 160 is about 10-20 N.

The leaf spring 160 also functions as a component that forms the magnetic circuit, so it is desirable to avoid an existence of the slit 164 and the interval 165 in the leaf spring 160, if possible, when the coil 140 is energized. However, in this example, the slits 164 and the intervals 165 are both less than 1 millimeter, and the magnetic field does not become saturated, as described above. In addition, in this example, the width of the leaf spring 160 is approximately the same in the first plate portion 161, the second plate portion 162, and the connecting portion 163, so that no restrictive points that specifically constrict the magnetic flux are formed inside the leaf spring 160 itself. Therefore, the leaf spring 160 effectively functions as a member that constitutes the magnetic circuit.

When the control device 210 stops energizing the coil 140, an elastic force of the leaf spring 160 causes the moving core 150 to move in a direction in which it is pulled back from the stator core 118. The moving core 150 reaches a state in which an elastic deformation of the leaf spring 160 shown in FIG. 4 is zero, and then the moving core 150 is displaced further upward than that in FIG. 4 by a moving inertia moment. The moving core 150 generates a vibration within the housing 110 by both a motion of the moving core 150 toward the stator core 118 when the coil 140 is energized, and a motion of the moving core 150 in a direction retracted from the stator core 118 when the coil 140 is de-energized. As for the amount of displacement, the moving core 150 vibrates up and down in FIG. 4 by about 0.5-1 millimeter from a state shown in FIG. 4.

The vibration of the moving core 150 caused by energizing and de-energizing the coil 140 will eventually dampen, but as described above, the control device 210 repeatedly energizes and de-energizes the coil 140 at a predetermined frequency. Therefore, the vibration of the moving core 150 continues for a period controlled by the control device 210. An acceleration of the moving core 150 is about 10 G during this period. If it is attached to the seat 200 of the vehicle, vibrations can be reliably transmitted to the occupant.

In the above-described example, the stator core 118 is formed integrally with the housing 110. This is effective because it reduces the number of components of the stator core 118 and reduces the number of assembly steps. However, it is also possible to form the stator core 118 separately from the housing 110 and then fix it to the housing 110 by adhesive, bolts, or the like.

In the above-described example, the housing 110 and the flat plate portion 152 of the moving core 150 are hexagonal shapes, but they may be other shapes, for example, they may be circular shapes as shown in FIG. 5. This may be changed according to a shape of a part where the vibration device 100 is installed. However, circular shapes as shown in FIG. 5 are desirable in view of a viewpoint of manufacturing aspect.

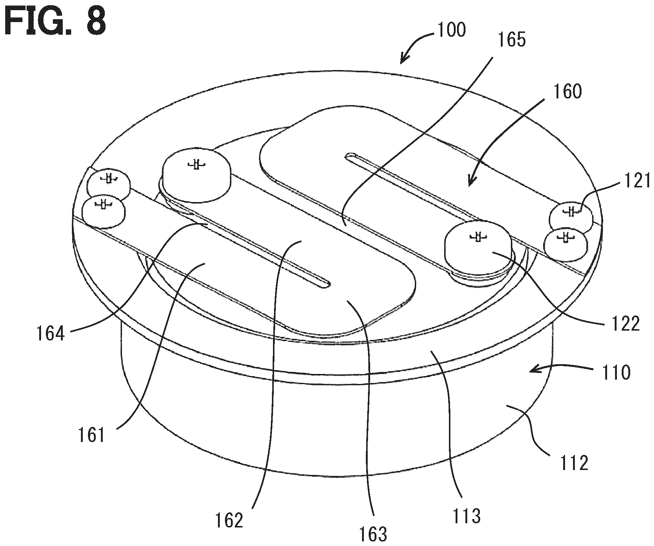

Furthermore, in the above example, three portions of the leaf spring 160 are used, but any number of portions of the leaf spring 160 may be used. FIG. 6 shows an example in which four portions of the leaf spring 160 are used. As shown in FIG. 8, an example in which two portions of the leaf spring 160 are used may be also included. The plurality of portions of the leaf spring 160 each have the same shape. And they are arranged in a well-balanced manner around the central axis. If there are three or more portions, they are arranged point-symmetrically with respect to the central axis, as shown in FIG. 1, FIG. 5 and FIG. 6. The example of FIG. 8 in which two leaf springs 160 are arranged is also arranged point symmetrically with respect to the central axis. However, although not shown, if there are two portions of the leaf spring 160, it is also possible to arrange them so as to be symmetrical with respect to a line including the central axis. In the present disclosure, an arrangement that is symmetrical with respect to a line that includes the central axis is also included in an arrangement that is point-symmetrical with respect to the central axis.

In FIG. 6, the leaf spring 160 is generally S-shaped, and forms a third plate portion 166 between the first plate portion 161 and the second plate portion 162. Even in the case of this S-shape, the first plate portion 161, the second plate portion 162, the third plate portion 166 and the connecting portion 163 have approximately the same width. It is possible to further increase an amount of displacement of the leaf spring 160 per projected surface area, by forming the leaf spring 160 in an S-shape.

The shape of portions of the leaf spring 160 is not related to the number of portions of the leaf spring 160. An S-shaped leaf spring 160 may be used in an example in which the number of portions of the leaf spring 160 is three as shown in FIGS. 1 to 5 or an example in which the number of portions of the leaf spring 160 is two as shown in FIG. 8, and conversely, a J-shaped leaf spring 160 may be used in an example in which four of portions of the leaf spring 160 are used as shown in FIG. 6. The shape of the leaf spring 160 need only include a slit 164 formed between the first plate portion 161 fixed to the housing 110 and the second plate portion 162 fixed to the moving core 150, and other shapes are also possible.

In the above example, the portions of the leaf spring 160 all have the same shape. This is desirable because it allows the number of parts to be reduced and allows for a well-balanced layout. However, in the present disclosure, the same shape may mean a shape that is roughly the same. Depending on the requirements of the assembly position and the like, portions of the leaf spring 160 may have slightly different shapes. Therefore, in the present disclosure, "having the same shape" refers to having roughly the same shape. Similarly, "symmetrical about the central axis" refers to a state in which the balance is generally achieved about the central axis. It may be included in a scope of "symmetrical about the central axis" in this disclosure as long as it is within a range in which no adverse effect occurs in a behavior of the vibration device 100 due to largely loosing a balance.

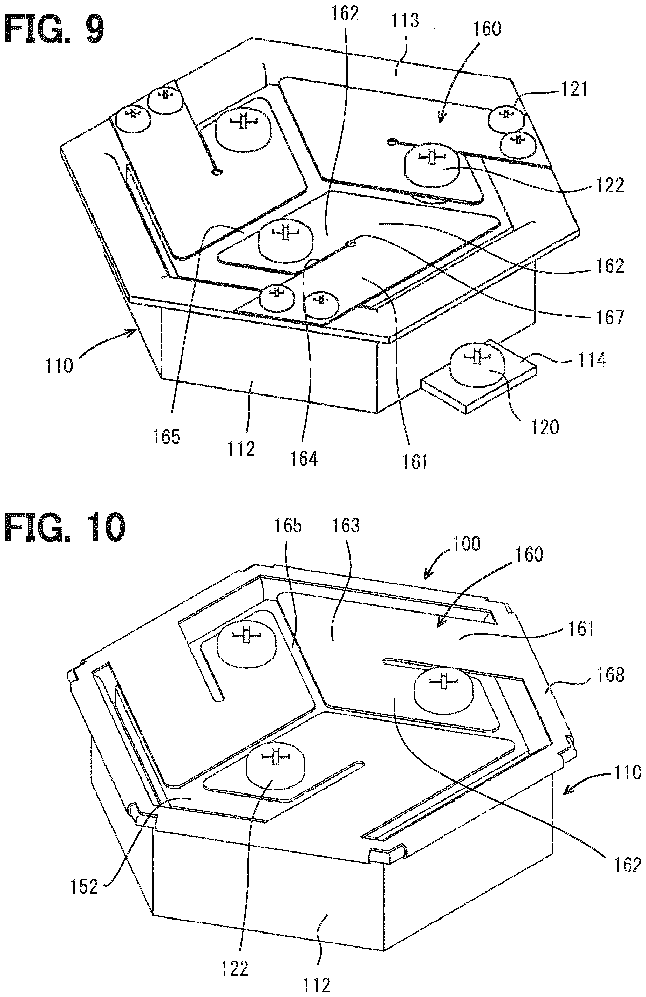

In the above example, the slit 164 is formed to a predetermined width, but the slit 164 may literally be a cut, in which the first plate portion 161 and the second plate portion 162 come in contact with each other at the slit 164 in between. In that case, it is desirable to form a stress relaxation portion 167 such as a circular hole so that stress is not concentrated at an end of the slit 164, as shown in FIG. 9.

In the above example, the plurality of portions of the leaf spring 160 are fixed to the flange portion 113 of the housing 110 by the flange bolts 121. However, as shown in FIG. 10, an outer periphery 168 of a plurality of portions of the leaf spring 160 may be continuous. By making the outer periphery 168 continuous, it is possible to prevent the plurality of portions of the leaf spring 160 from becoming separated, and it is possible to improve a workability during assembly.

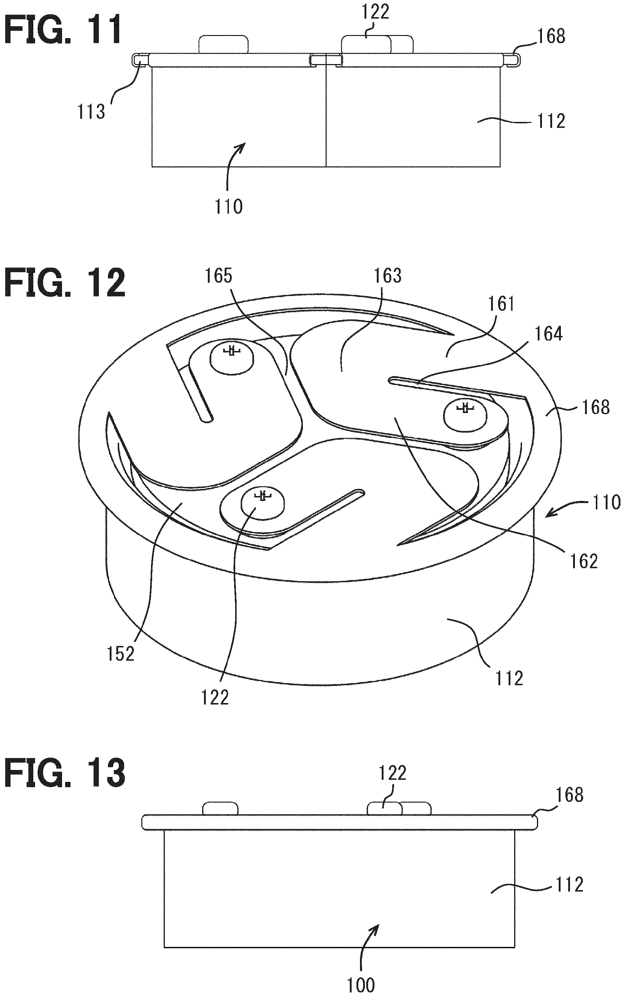

Furthermore, by making the outer periphery 168 continuous, it is also possible to fix the outer periphery 168 to the flange portion 113 of the housing 110 by the winding and fastening method. As shown in FIG. 11, it is possible to eliminate the flange bolts 121 by fixing the outer periphery 168 to the flange portion 113 by the winding and fastening method.

Even when the outer periphery 168 is continuous, the leaf spring 160 may have a variety of shapes. FIG. 12 shows an example in which the housing 110 has a cylindrical shape. In this example, the leaf spring 160 has a J-shape similar to that shown in FIG. 5, and three of them are arranged symmetrically about the central axis. In this example as well, as shown in FIG. 13, the outer periphery 168 is fixed to the flange portion 113 of the housing 110 by the winding and fastening method.

Although it is not shown, it is also possible to connect a plurality of portions of the leaf spring 160 in succession near the central axis. If a plurality of portions of the leaf spring 160 are connected continuous near the central axis, it is possible to reduce the number of core bolts 122 to one. In that case, it becomes possible to connect a plurality of portions of the leaf spring 160 to the moving core 150 with a single core bolt 122.

In the above example, the control device 210 controls the moving core 150 so as not to collide with the stator core 118. This is also desirable control in terms of improving the vibration characteristics of the vibration device 100. In addition, it is possible to improve a durability of the vibration device 100 by preventing collisions. However, if necessary, a design that allows collision between the moving core 150 and the stator core 118 may be permitted. It is possible to change vibration patterns depending on whether or not there are collisions. If a collision is allowed, it is desirable to coat both the moving core 150 and the stator core 118 with a hardened surface layer.

In the above-described example, the vibration device 100 is installed on the seat 200 of the vehicle. A transmission of vibration information from the seat is one of desirable examples of usages of the vibration device 100. However, the vibration device 100 of the present disclosure is not necessarily limited to use in vehicles. It is also possible to incorporate it into equipment carried by people as a mobile device. Also, when used in vehicles, there may be other usages such as horns.

Furthermore, the materials and sizes described above are merely examples and can be appropriately selected depending on the required performance. The disclosure in this specification, the drawings, and the like is not limited to the exemplified embodiments. The present disclosure includes embodiments described above and modifications of the above-described embodiments made by a person skilled in the art.

### (Disclosure of Technical Idea)

This description discloses multiple technical ideas described in multiple sections listed below. Some sections may be written in a multiple dependent form, where a subsequent section refers to preceding sections selectively. In addition, some sections may be described in a multiple dependent form referring to another multiple dependent form. These sections written in the multiple dependent form define multiple technical ideas.

(Technical Idea 1)
a coil wound around a cylindrical bobbin and excited by being energized;
a housing which holds the coil;
a stator core disposed on an inner periphery of the coil and supported by the housing;
a moving core disposed on the inner periphery of the coil and facing the stator core with a magnetic gap therebetween; and
a leaf spring fixed to the moving core and also to the housing to bias the moving core in a direction away from the stator core, wherein
the housing, the stator core, the moving core, and the leaf spring form a magnetic circuit when the coil is excited, and wherein
the leaf spring includes a plurality of portions which are arranged in a plurality of positions symmetrical about a central axis of the coil, each of the plurality of portions of the leaf spring being the same shape each other, and each of the plurality of portions of the leaf spring being formed with a slit that increases an amount of displacement of the leaf spring, and wherein
the slit has a width which enables magnetic flux to pass through when the coil is excited.

### (Technical Idea 2)

The vibration device according to claim 1, wherein the plurality of portions of the leaf spring are arranged to define an interval substantially the same as a width of the slit.

### (Technical Idea 3)

The vibration device according to claim 1 or 2, wherein the leaf spring includes a first plate portion fixed to the housing, a second plate portion fixed to the moving core, and a connecting portion connecting the second plate portion and the first plate portion, and wherein
the slit is formed between the first plate portion and the second plate portion.

### (Technical Idea 4)

The vibration device according to claim 3, wherein a width of the first plate portion, a width of the second plate portion, and a width of the connecting portion are substantially the same as each other.

### (Technical Idea 5)

The vibration device according to any one of claims 1-4, wherein the leaf spring includes a plurality of outer peripheral portions which face the housing and being connected with each other.

### (Technical Idea 6)

The vibration device according to claim 5, wherein the plurality of outer peripheral portions of the leaf spring is fixed to the housing by a winding and fastening method.

## Claims

1. A vibration device, comprising:
a coil wound around a cylindrical bobbin and excited by being energized;
a housing which holds the coil;
a stator core disposed on an inner periphery of the coil and supported by the housing;
a moving core disposed on the inner periphery of the coil and facing the stator core with a magnetic gap therebetween; and
a leaf spring fixed to the moving core and also to the housing to bias the moving core in a direction away from the stator core, wherein
the housing, the stator core, the moving core, and the leaf spring form a magnetic circuit when the coil is excited, and wherein
the leaf spring includes a plurality of portions which are arranged in a plurality of positions symmetrical about a central axis of the coil, each of the plurality of portions of the leaf spring being the same shape each other, and each of the plurality of portions of the leaf spring being formed with a slit that increases an amount of displacement of the leaf spring, and wherein
the slit has a width which enables magnetic flux to pass through when the coil is excited.

2. The vibration device according to claim 1, wherein
the plurality of portions of the leaf spring are arranged to define an interval substantially the same as a width of the slit.

3. The vibration device according to claim 1 or 2, wherein
the leaf spring includes a first plate portion fixed to the housing, a second plate portion fixed to the moving core, and a connecting portion connecting the second plate portion and the first plate portion, and wherein
the slit is formed between the first plate portion and the second plate portion.

4. The vibration device according to claim 3, wherein
a width of the first plate portion, a width of the second plate portion, and a width of the connecting portion are substantially the same as each other.

5. The vibration device according to claim 1, wherein
the leaf spring includes a plurality of outer peripheral portions which face the housing and being connected with each other.

6. The vibration device according to claim 5, wherein
the plurality of outer peripheral portions of the leaf spring is fixed to the housing by a winding and fastening method.
